# EUROPÄISCHE PATENTSCHRIFT

(11) **EP 0 512 410 B1**
(45) Veröffentlichungstag und Bekanntmachung des Hinweises auf die Patenterteilung: **07.02.1996**
(21) Anmeldenummer: 92107380.5
(22) Anmeldetag: 30.04.1992
(51) Int. Cl.: C02F 1/28, C02F 3/12

(54) **Verfahren und Einrichtung zum Entfernen von Schadstoffen aus Wasser**
Process and apparatus for eliminating contaminants from water
Procédé et appareil d'élimination des polluants des eaux

(30) Priorität: 02.05.1991 DE 4114322
(43) Veröffentlichungstag der Anmeldung: 11.11.1992
(73) Patentinhaber: URT Umwelttechnik GmbH, D-50354 Hürth (DE)
(72) Erfinder: Faber, Wolfgang, Dr.rer.nat. Dipl.-Chem., W-5020 Frechen (DE); Felgener, Gerd W., Dipl.-Ing., W-4048 Grevenbroich (DE)

(56) Entgegenhaltungen:
- EP-A- 0 100 007
- EP-A- 0 379 041
- AT-A- 378 529
- US-A- 4 009 105
- PATENT ABSTRACTS OF JAPAN vol. 12, no. 159 (C-495)14. Mai 1988

## Beschreibung

Die Erfindung betrifft ein Verfahren und eine Einrichtung zum Entfernen von Schadstoffen aus Wasser durch Adsorption an feinkörnigen Adsorbentien mit einer großen spezifischen Oberfläche, die mit dem Wasser eine Suspension bilden.

Bei dem zu reinigenden Wasser kann es sich z. B. um industrielle Abwässer, auch solche aus der Textilindustrie, aber auch um kommunale Abwässer, wie z. B. Sickerwasser aus Deponien handeln, welches vor allem biologisch nicht oder nur schwer abbaubare Reststoffe, wie insbesondere organische Verbindungen, die über den Parameter CSB (chemischer Sauerstoffbedarf) definiert werden, Schwermetalle und halogenierte Kohlenwasserstoffe (AOX) enthält. Daneben können aber auch Ammonium und organische Stickstoffverbindungen vorhanden sein. Während Stickstoffverbindungen im allgemeinen durch biologische Behandlung oxidiert werden (Nitrifizierung), bei welcher auch biologisch abbaubare organische Substanzen zumindest weitgehend entfernt werden, sind die schwer abbaubaren organischen Verbindungen (CSB) und auch die halogenierten Kohlenwasserstoffe (AOX) überwiegend nur durch adsorptive Maßnahmen zu entfernen.

Unter Adsorption wird die Anlagerung und physikalische Bindung von Stoffen in flüssiger oder gasförmiger Phase an der Oberfläche von festen Stoffen verstanden. Die Adsorption beruht auf physikalischen und/oder chemischen Vorgängen, wobei auch die van der Waal'sche Anziehungskraft eine Rolle spielt.

Die Vorgänge bei der adsorptiven Anlagerung lassen sich etwa folgendermaßen aufgliedern:
1. Verteilung der zu adsorbierenden Substanzen in der freien Lösung;
2. Bei Kontakt mit einem Adsorbens-Teilchen Transport der zu adsorbierenden Substanzen durch die Grenzschicht (Filmschicht), die sich um das Adsorbens-Teilchen bildet;
3.Transport der zu adsorbierenden Substanzen in das Adsorbens-Teilchen (Porendiffusion);
4. eigentliche Adsorption, d.h. physikalische Bindung der zu adsorbierenden Substanzen an äußerer und innerer Oberfläche des Adsorbens-Teilchens.

Von den vorstehend angeführten vier Schritten sind insbesondere die Schritte 2. und 3. für den Adsorptionsvorgang, vor allem bezüglich der Geschwindigkeit, mit der dieser abläuft, bestimmend, wobei für das Ausmaß der Beladung des Adsorbens-Teilchens auch die verfügbare Oberfläche desselben von Bedeutung ist. Ferner kommt der Gleichgewichtskonzentration in der zu reinigenden Flüssigkeit eine besondere Bedeutung zu, die sich dahingehend auswirkt, daß mit abnehmender Endkonzentration der zu entfernenden Stoffe in der zu reinigenden Flüssigkeit die spezifische Beladung der Adsorbentien abnimmt. Dieser Zusammenhang, der im allgemeinen durch die Adsorptionsisotherme dargestellt wird, hat zur Folge, daß mit zunehmenden Anforderungen an den Reinheitsgrad des behandelten Wassers, d.h. mit abnehmender Restverschmutzung, der Verbrauch an Adsorbentien zunimmt. Dabei spielt das Vorhandensein der bereits erwähnten Grenzschicht, die sich um das Adsorbens-Teilchen ausbildet, eine wesentliche Rolle. Diese Grenzschicht besteht im allgemeinen aus Luft. Sie bleibt normalerweise auch nach dem Eingeben der Adsorbentien in die zu reinigende Flüssigkeit erhalten, so daß der Zugang der in der zu reinigenden Flüssigkeit enthaltenden Substanzen zu den Adsorptionsflächen durch diese Grenzschicht behindert wird. Letztere kann aber auch aus Wasser bestehen, wenn das Adsorbens-Teilchen lange genug mit dem Wasser in Berührung ist. Auch dann würde der Zugang der zu entfernenden Substanzen zu den Oberflächen des Adsorbens-Teilchens behindert sein, da nur ein geringer Austausch zwischen dem diese Grenzschicht bildenden Wasser und dem umgebenden Wasser stattfindet.

Der Erfindung liegt die Aufgabe zugrunde, Verfahren und Einrichtung der einleitend beschriebenen Art so abzuwandeln, daß die Beladung der Adsorbentien und somit auch die Beziehung zwischen der Menge der im behandelten Wasser verbleibenden Schadstoffe und der Beladung, d.h., die Adsorptionsisotherme, wesentlich verbessert werden. Die angestrebte Verbesserung kann auch in einer Verringerung der Verweilzeit (Kontaktzeit der Adsorbentien mit dem Wasser) zur Erielung eines bestimmten Reinigungseffektes bestehen.

Zur Lösung dieser Aufgabe schlägt die Erfindung bei einem Verfahren zum Entfernen von Schadstoffen aus Wasser durch Adsorption an festen, feinkörnigen Adsorbentien mit einer großen spezifischen Oberfläche, die mit dem Wasser eine Suspension bilden und dem zu reinigenden Wasser mit einer solchen Korngröße aufgegeben werden, daß innerhalb der Suspension durch entsprechende Energiezufuhr zu dieser eine Zerkleinerung zumindest der grobkörnigeren Bestandteile der Adsorbentien erfolgt, um so im Verlauf des Adsorptionsprozesses frische Oberfläche für die Adsorption zu schaffen, vor, daß die für die Zerkleinerung der Adsorbentien erforderliche Energie durch Rühren unter Verwendung eines Rührschlaufenreaktors in die Suspension eingeführt wird.

Zwar ist aus AT-A-378529 ein Verfahren zum Reinigen von Wasser durch Zusatz von adsorptivem Feststoff bekannt, dessen Oberfläche dadurch aktiviert wird, daß er in kleinste Partikel zerteilt und gleichzeitig mit dem Wasser in Berührung gebracht wird. Die dazu verwendete Vorrichtung dient jedoch mehr der Zerkleinerung der Adsorbentien als der Vermischung der Komponenten zwecks Bildung einer Suspension. Dies ergibt sich aus der Tatsache, daß aufgrund der Ausgestaltung dieser Vorrichtung das Gemisch durch einen schmalen Spalt nach außen gegen eine umlaufende Begrenzungswand des Gehäuses fließt und nach Verlassen des Spaltes keinerlei Rühreinwirkung mehr unterliegt.

Demgegenüber läuft die Erfindung darauf hinaus, daß Adsorption und Zerkleinerung der Adsorbentien in der Suspension gleichzeitig stattfinden und der dazu verwendete Reaktor verfahrenstechnisch gleichzeitig als Zerkleinerungsaggregat, in dem eine Naßmahlung stattfindet, und als Adsorptionsreaktor dient.

Für den angestrebten Effekt ist dabei nicht nur die Tatsache maßgeblich, daß durch die weitgehende Zerkleinerung der Adsorbens-Teilchen die Oberfläche derselben vergrößert wird. Letzteres könnte auch durch Zerkleinerung der Adsorbentien auf eine entsprechende Korngröße vor Einführen der Adsorbentien in das zu behandelnde Wasser erreicht werden. Entscheidend ist neben der Vergrößerung der für die Adsorbentien wirksamen Oberflächen vielmehr, daß die Zerkleinerung der Adsorbentien in der Suspension zu neuen Oberflächen führt, die im Augenblick ihrer Entstehung wegen des Fehlens der mehr oder weniger stationären Grenzschicht eine größere adsorbierende Wirkung haben als eine Oberfläche, die durch diese Grenzschicht, ggf. auch durch Oxidation und ähnliche Einflüsse, einen Teil ihrer Wirksamkeit durch schlechte Zugänglichkeit verloren hat. Die Bedeutung des Vorhandenseins dieser neuen Oberlfäche im Augenblick ihrer Entstehung ergibt sich ohne weiteres daraus, daß die die Adsorption bewirkenden Kräfte nur in unmittelbarer Nähe der Oberfläche wirksam sind, so daß eine innige Berührung zwischen den adsorbierenden Oberflächen und den zu adsorbierenden Stoffen, die im Wasser enthalten sind, die wesentliche Voraussetzung für das Erzielen einer guten Beladung der Adsorbention ist. Selbstverständlich werden sich auch an den neuen Oberflächen im Laufe der Zeit Grenzschichten bilden. Die für die Zerkleinerungsarbeit in die Suspension eingebrachte Energie führt aber auch zum Entstehen von Scherkräften mit dem Ergebnis, daß die Grenzschichten nur eine geringe Dicke aufweisen.

Die Zerkleinerung der grobkörnigeren Bestandteile der Adsorbentien erfolgt durch intensives Rühren der Suspension, so daß häufige und schlagartige Berührungen zwischen zwei oder mehreren Partikeln und auch zwischen diesen und der Reaktorwandung und dem Rührwerk erfolgen, wodurch feinster Adsorbens-Abrieb mit einer Korngröße von z. B. 5 - 30 µm entsteht. Dabei ist es selbstverständlich zweckmäßig, als Adsorbens ein Material zu verwenden, welches nicht abriebfest ist und einer Zerkleinerung nur wenig Widerstand entgegensetzt. Als besonders vorteilhaft hat sich dabei Aktivkohle erwiesen, wobei jedoch Braunkohlenkoks aufgrund seiner geringen Gestehungskosten der Vorzug zu geben ist. Vor allem ist Herdofenkoks aus Braunkohle für die Anwendung der Erfindung geeignet, da dieser Koks ohne zusätzliche Behandlungen eine spezifische Oberfläche aufweist, die nicht wesentlich kleiner ist als die von üblicher Aktivkohle, und dabei leicht zerkleinert werden kann. Herstellung und Eigenschaften von Braunkohlen-Herdofenkoks werden in HB. Königs: "Feinkokserzeugung durch "Braunkohle", Energiewirtschaftliche Tagesfragen, 27. Jg. 1977, Heft 8/9. S. 569-599; E. Scherrer: "Herstellung von Braunkohlenkoks im Salem-Lurgi-Herdofen", Braunkohle, Heft 7, Juli 1981, S. 242-246 und D. Boecker: "Edle Körner" Energie, Jg. 35, Heft 3, 1983, S. 35-37 beschrieben.

Die Korngröße der Adsorbentien vor Hinzufügung zur Suspension und somit vor ihrer Zerkleinerung kann in der Größenordnung von 0,05 - 5,0 mm liegen, wobei jedoch der Anteil der Körner unter 0,5 mm in Abhängigkeit vom verwendeten Adsorbens weniger als 20% betragen kann. Diese Ausgangs-Korngröße bietet jedenfalls bei Herdofenkoks aus Braunkohle gute Voraussetzungen für die Zerkleinerung der gröberen Körner in der Suspension. Durch die Zerkleinerung erfolgt eine Veschiebung der Kornzusammensetzung der Adsorbentien in Richtung auf eine Vergrößerung des Anteils der kleineren Körnung, wobei beispielsweise bei Verwendung von Herdofenkoks aus Braunkohle nach der Zerkleinerung ein großer Teil der Adsorbentien in einer Größenordnung von 5 - 30 µm vorliegt. Diese kleinen Partikel zeichnen sich insbesondere durch folgende Eigenschaften und Wirkungen aus:
1. Sie haben eine große spezifische Oberfläche;
2. sie bieten kurze Transportwege in das Innere des jeweiligen Partikels;
3. eine Grenzschicht ist im Augenblick des Entstehens der neuen Oberflächen durch die Zerkleinerung nicht vorhanden; die sich im Laufe der Zeit bildende Grenzschicht weist eine geringere Stärke auf;
4. die Vielzahl der Kleinst-Partikel führt im Zusammenhang mit der die Zerkleinerung bewirkenden Rührbewegung zu einer gleichmäßigen Verteilung der Adsorbentien in dem von der Suspension gebildeten Gesamtsystem;
5. die Vielzahl von Kleinst-Partikeln führt zu einer hohen Verteilungsdichte im Gesamtsystem, so daß sehr viel Adsorbens-Oberfläche pro Raumeinheit in der Suspension vorhanden ist;
6. es wird eine hohe Beladungsdichte mit zu adsorbierenden Stoffen auf den Adsorbentien erreicht.

Insgesamt läßt sich bei Anwendung des Verfahrens gemäß der Erfindung eine wesentlich höhere spezifische Beladung des Adsorbens als bei bekannten Verfahren erzielen. Es wird bei gleicher Reinigungsleistung eine um den Faktor 0,5 - 0,3 geringere Menge an Adsorbens benötigt. Ferner können aufgrund der besseren Adsorptionskinetik die apparativen Einrichtungen etwa um den Faktor 0,5 kleiner gebaut werden, da die Beladungsgeschwindigkeit proportional der wirksamen Adsorbensfläche ist. Hinzu kommt der günstige Einfluß des großen Konzentrationsgefälles, welches sich zwischen den neu gebildeten Oberflächen und den im Wasser befindlichen Schadstoffen einstellt. Dieses hohe Konzentrationsgefälle führt zu einer schnelleren Beladung.

Im übrigen ist es in der Mehrzahl der Fälle zweckmäßig, den pH-Wert der Suspension so einzustellen, daß ein schwach saures Milieu vorhanden ist. Dabei kann es zweckmäßig sein, Mittel vorzusehen, um den pH-Wert fortlaufend zu regeln, da durch gleichzeitig ablaufende Vorgänge, z. B. Nitrifikation, der pH-Wert Schwankungen unterliegen kann.

Das zu behandelnde Wasser kann vor Eintreten in die Adsorptionsstufe(n) einer biologischen Behandlung unterzogen werden. Es ist auch möglich, das Wasser nach der Adsorptionsbehandlung einer biologischen Behandlung zu unterziehen.

Es kann insbesondere bei mehrstufiger Adsorptionsbehandlung wenigstens eine der Adsorptionsstufen auch zur biologischen Behandlung des Wassers benutzt werden. Es ist ferner möglich, dabei die Adsorbentien auch als Trägermaterial für Bakterien zu verwenden, wobei das Adsorbens zur Anreicherung mit Nährstoffen vorbehandelt sein kann. Dabei kann ggf. das Adsorbens zunächst in der wenigstens einen Adsorptionsstufe verwendet und danach in beladenem Zustand in eine vorgeschaltete biologische Stufe gegeben werden.

Das Adsorbens kann auch in beladenem Zustand in eine nachgeschaltete biologische Behandlungsstufe gegeben werden, wobei dann - in Abhängigkeit von den in der wenigstens einen Adsorptionsstufe aufgenommenen Substanzen - gegebenenfalls die die Beladung des Adsorbens darstellenden Substanzen als Nährstoff für die Bakterien genutzt werden. In diesem Fall kann die Nährstoffaufnahme durch die Bakterien eine Desorption darstellen.

Die Entfernung von Schadstoffen aus dem Wasser durch adsorptive und/oder biologische Behandlung kann in zwei oder mehr aufeinanderfolgenden Verfahrensstufen erfolgen, wobei die Zugabe des frischen Adsorbens z. B. in der zweiten, dritten usw. Stufe erfolgt, von der es zur weiteren Beladung in eine vorgeschaltete Stufe geführt wird, in die das adsorptiv und/oder biologisch zu behandelnde Wasser eintritt. Hierbei wird das Adsorbens im Gegenstrom zum zu behandelnden Wasser geführt. Bei der gleichzeitig mit der adsorptiven Behandlung durchgeführten biologischen Behandlung oder bei einer biologischen Behandlung vor der adsorptiven Behandlung kann der ersten Verfahrensstufe, in der das Wasser biologisch und adsorptiv behandelt wird, eine Kläreinrichtung nachgeschaltet sein, wobei das daraus abgezogene Adsorbens teilweise in die erste Stufe zurückgeführt wird. Auf diese Weise wird eine Verarmung an Bakterien in der ersten Behandlungsstufe für das Wasser vermieden. Ferner kann so verfahren werden, daß eine merkliche Zerkleinerung der Adsorbentien lediglich in der zweiten Behandlungsstufe für das Wasser durchgeführt wird, die die erste Benutzungsstufe für das Adsorbens darstellt.

Die für die Zerkleinerung der Adsorbentien erforderliche Energie kann durch einen innerhalb der Suspension befindlichen Rührer eingeführt werden. Als besonders zweckmäßig hat sich die Verwendung wenigstens eines Rührschlaufenreaktors erwiesen.

Die Erfindung sieht weiterhin die Möglichkeit vor, das Rühren der Suspension unter aeroben Bedingungen durchzuführen. Dabei kann sich der Sauerstoff mit wenigstens einer der zu adsorbierenden Substanzen umsetzen, wobei das Adsorbens jedenfalls dann, wenn es sich um Koks od. dgl. handelt, als Katalysator wirkt. In vielen Fällen sind die so entstehenden Substanzen leichter adsorbierbar als die Ausgangsstoffe.

Das beladene Adsorbens kann deponiert werden. Bei Verwendung von brennbarem Material, insbesondere des bereits genannten Herdofenkokses aus Braunkohle, wird es jedoch vorteilhafter sein, das beladene Adsorbens zu verbrennen und die dabei entstehende Wärme zu nutzen.

Das adsorptiv und ggf. biologisch behandelte Wasser kann weiterhin mit einem Flockungs-Fällungsmittel behandelt werden, um den Schadstoffgehalt des Wassers weiter zu verringern. Tatsächlich stellt die Kombination von adsorptiver und biologischer Behandlung sowie einer Behandlung mittels Flockung und Fällung nach dem heutigen Stand der Technik in Anbetracht der vielen unterschiedlichen Schadstoffe, die insbesondere in Sickerwasser aus Deponien vorhanden sind, eine Art Optimum dar, da so die einzelnen Behandlungsmaßnahmen an die im zu reinigenden Wasser enthaltenden Schadstoff-Komponenten angepaßt werden können.

Ferner kann es zweckmäßig sein, das adsorptiv und ggf. durch Flockung und Fällung behandelte Wasser abschließend durch wenigstens eine Filterschicht aus Aktivkoks oder anderem Koks hindurchzuleiten, der ggf. basische Eigenschaften aufweist.

Einmal dient ein derartiger Festbett-Koksfilter zur adsorptiven Entferneung von Metallen, insbesondere Schwermetallen aus dem Wasser. Darüber hinaus erfolgt dann, wenn Koks mit einer basischen Asche verwendet wird, dies zu einer pH-Wert-Verschiebung, so daß das den Filter verlassende Wasser weniger sauer ist.

In der Zeichnung sind zwei Ausführungsbeispiele der Erfindung dargstellt. Es zeigen:
- Fig. 1: das Schaltbild einer ersten Ausführungsform,
- Fig. 2: das vereinfachte Schaltbild einer zweiten Ausführungsform, bei welcher zugleich auch eine biologische Behandlung erfolgt.

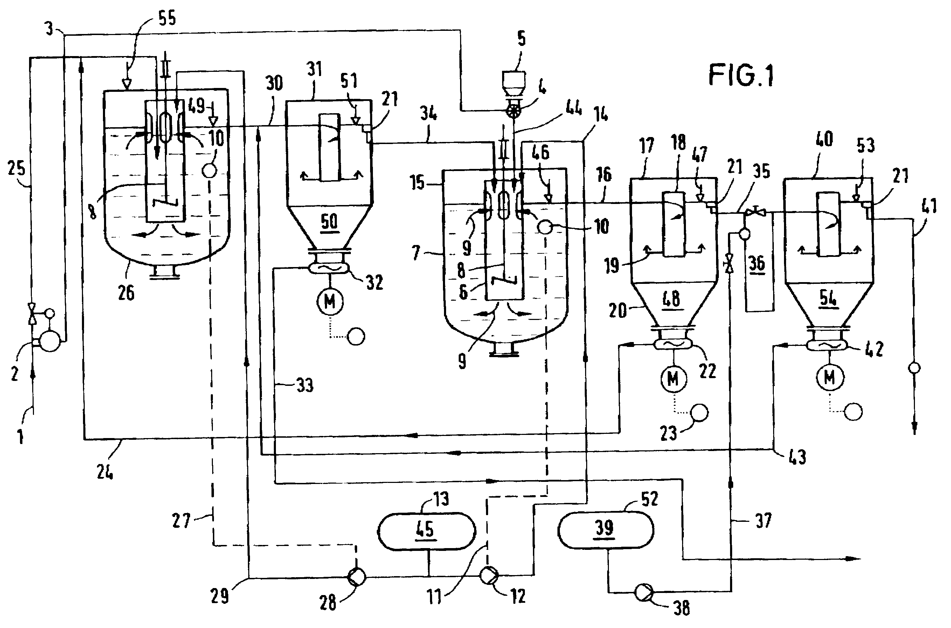

Beim Ausführungsbeispiel gemäß Fig. 1 wird der Reinigungsanlage biologisch vorgereinigtes Deponie-Sickerwasser 1 zugeführt. Die Belastung dieses Wassers durch mitgeführte adsorbierbare Schadstoffe wird von einem Fühler 2 gemessen und als Führungsgröße über eine Regelstrecke 3 zu einem Austrags- und Dosierorgan 4 für frisches Adsorbens 44 aus einem Vorratsbehälter 5 übertragen. Bei dem Adsorbens 44 kann es sich z. B. um Herdofenkoks aus Braunkohle handeln.

Das frische Adsorbens 44 fällt in das Leitrohr 6 eines Rührschlaufenreaktors 7, innerhalb dessen von einem Rührer 8 eine umlaufende Strömung in Richtung der Pfeile 9 erzeugt wird. Gleichzeitig wird der pH-Wert innerhalb des Reaktors 7 von einem Fühler 10 ermittelt und über eine Signalleitung 11 auf eine Dosierpumpe 12 übertragen, welche aus einem Vorratsbehälter 13 Schwefelsäure 45 oder ein anderes Agens über eine Zuleitung 14 in den Reaktor 7 zur Einstelleung des pH-Wertes in demselben fordert. Dabei wird die Zufuhr von Schwefelsäure 45 in den Reaktor 7 derart geregelt, daß sich innerhalb des Reaktors 7 ein schwach saures Milieu mit einem pH-Wert von 5 - 7 einstellt.

Aus dem oberen Bereich des Rührschlaufenreaktors 7 wird über eine Leitung 16 ständig eine Suspension 46 aus behandeltem Deponie-Sickerwasser und teilbeladenem Adsorbens einem Trennapparat 17 zugeführt. Bei letzterem kann es sich um einen sogenannten Dortmunder Brunnen handeln. Die Suspension 46 wird in ein Leitrohr 18 eingespeist, aus welchem sie in Richtung der Pfeile 19 in den Trennapparat 17 eintritt.

Im Trennapparat 17 wird die zugeführte Suspension 46 in weitgehend gereinigtes Wasser und Adsorbentien getrennt, welche sich in dem kegelförmigen unteren Bereich 20 des Trennapparates 17 als eingedickter Feststoff 48 sammeln. Während das Wasser 47 den Trennapparat 17 über einen Überlauf 21 verläßt, wird der eingedickte Feststoff 48 aus dem unteren Bereich 20 des Trennapparates 17 mittels einer Dickstoffpumpe 22 abgezogen. Mit Hilfe dieser Dickstoffpumpe 22 wird innerhalb von Zeitintervallen, die von einem Zeitgeber 23 vorgegeben werden, jeweils eine Teilmenge des eingedickten Feststoffs 48 aus dem Trennapparat 17 abgezogen und über eine Leitung 24 der Zuleitung 25 für das ungereinigte Deponie-Sickerwasser 1 zugeführt. Aus der Zuleitung 25 werden das zu behandelnde Deponie-Sickerwasser 1 mit dem aus teilbeladenem Herdofenkoks bestehenden Feststoff 48 in einen ersten Rührschlaufenreaktor 26 eingegeben, der bezüglich seines Aufbaus mit dem zweiten Rührschlaufenreaktor 7 übereinstimmt. Der aus dem Trennapparat 17 abgesogene teilbeladene Herdofenkoks 48, der im zweiten Rührschlaufenreaktor 7 zur adsorptiven Entfernung von Schadstoffen aus dem bereits vorgereinigten Wasser 51 verwendet wurde, dient zur adsorptiven Vorreinigung des durch die Leitung 25 zugeführten Deponie-Sikkerwassers 1.

Auch der erste Rührschlaufenreaktor 26 weist einen Meßwertgeber 10 auf, welcher über eine Signalleitung 27 auf eine Dosierpumpe 28 wirkt, mit deren Hilfe Schwefelsäure 45 aus dem Behälter 13 über die Leitung 29 in den ersten Rührschlaufenreaktor 26 eingeführt werden kann, um ein schwach saures Milieu mit einem pH-Wert zwischen 5 und 7 einzustellen.

Im Unterschied zum Rührschlaufenreaktor 7 weist der erste Rührschlaufenreaktor 26 noch einen Anschluß 55 auf, über den unter der Wirkung des Rührers 8 von außen Luft in den ersten Rührschlaufenreaktor 26 gesaugt werden kann, um so das Deponie-Sickerwassar 1 im Reaktor 26 unter aeroben Bedingungen zu behandeln.

Auch aus dem ersten Rührschlaufenreaktor 26 wird kontinuierlich eine Suspension 49 abgezogen, die aus beladenem Aktivkoks und vorgereinigtem Deponie-Sickerwasser 51 besteht. Die Suspension 49 wird einem ersten Trennapparat 31 zugeführt, welcher in seinem Aufbau und auch bezüglich seiner Wirkungsweise mit dem Trennapparat 17 übereinstimmt.

Aus dem ersten Trennapparat 31 wird über eine Dickstoffpumpe 32 diskontinuierlich eingedickter, stark beladener Herdofenkoks 50 abgezogen und über eine Leitung 33 einer weiteren Verwendung, beispielsweise einer in der Zeichnung nicht dargestellten Feuerung zugeführt. Der Überlauf 51 aus adsorptiv vorgereinigtem Deponie-Sickerwasser wird über eine Zwischenleitung 34 in den zweiten Rührschlaufenreaktor 7 eingeleitet. Dort erfolgt die bereits beschriebene weitergehende adsorptive Reinigung des im Reaktor 26 bereits vorgereinigten Deponie-Sickerwassers 51 unter Verwendung des über das Austrags- und Dosierorgan 4 direkt in den Reaktor 7 eingeführten Herdofenkokses 44.

In wenigstens einem der beiden Rührschlaufenreaktoren 7, 26 wird über den jeweiligen Rührer 8 soviel Energie in die Suspension eingebracht, daß eine merkliche Zerkleinerung der aufgegebenen Adsorbentien eintritt. Diese Zerkleinerung kann in beiden Reaktoren 7 bzw. 26 erfolgen. Dies wird im allgemeinen die zweckmäßigste Vorgehensweise sein, da dabei sowohl bei der Vorreinigung im ersten Rührschlaufenreaktor 26 als auch bei der Nachreinigung im zweiten Rührschlaufenreaktor 7 durch das Entstehen von frischen Oberflächen die bereits beschriebenen Wirkungen und Vorteile, insbesondere eines günstigeren Verlaufs der Adsorptionsisotherme, erreicht werden, so daß bei höherer Beladung des Adsorbens der Schadstoffgehalt des den jeweiligen Trennapparat 17, 31 verlassenden Wassers 47, 51 geringer ist. In Abhängigkeit von den jeweiligen Umständen ist es aber auch möglich, das Zerkleinern des Adsorbens 44 ganz oder zumindest überwiegend in lediglich einem der beiden Rührschlaufenreaktoren 7, 26 durchzuführen. Dies hängt möglicherweise auch von der Verweilzeit des Adsorbens 44 im jeweiligen Rührschlaufenreaktor 7, 26 ab. Bei längerer Verweilzeit des Adsorbens 44 im zweiten Rührschlaufenreaktor 7 wird es im allgemeinen günstiger sein, eine Zerkleinerung der Adsorbens-Partikel in beiden Rührschlaufenreaktoren 7, 26 zu bewirken, da die im zweiten Rührschlaufenreaktor 7 entstehenden frischen Oberflächen nach längerer Verweilzeit wahrscheinlich weitgehend beladen oder aber mit einer Grenzschicht überzogen sind, bei deren Vorhandensein die bereits einleitend erwähnten Nachteile in Kauf zu nehmen sind.

Die folgende Tabelle zeigt das Ausmaß der Zerkleinerung, daß das Adsorbens 44 bei Anwendung in einer Einrichtung gemäß Fig. 1 erfahren kann, wobei in beide Rührschlaufenreaktoren 26 und 7 über die Rührer 8 etwa gleiche Energiemengen eingeführt wurden. Es ist anzunehmen, daß dabei in dem zweiten Rührschlaufenreaktor 7, in welchen das Adsorbens 44 zuerst eingeführt wird, eine stärkere Zerkleinerung stattfand, da hier das eingesetzte Adsorbens 44 noch eine gröbere Körnung aufweist.

### Zerkleinerung von Feinst-Herdofenkoks in der Reinigungsanlage

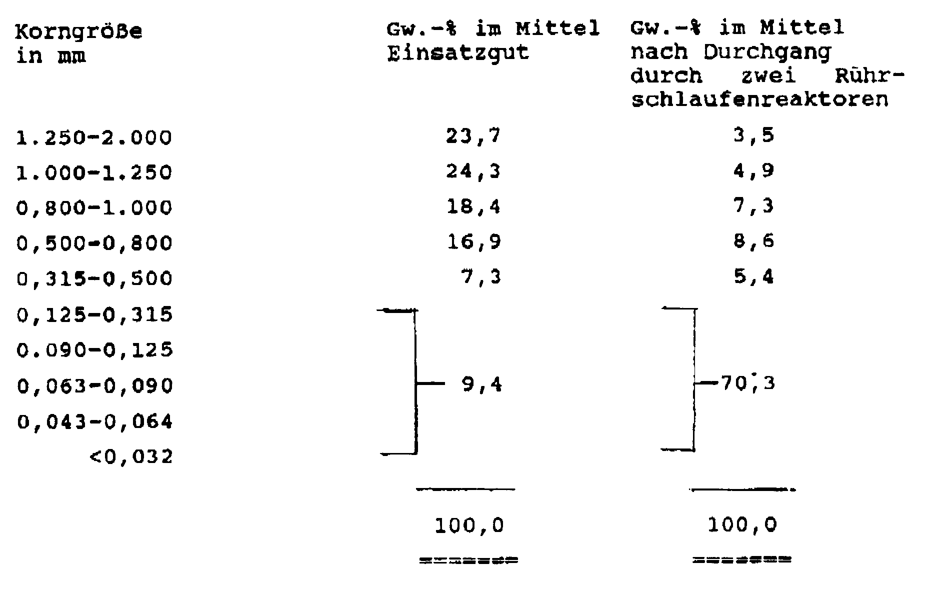

Der über das Austrags- und Dosierorgan 4 in den zweiten Rührschlaufenreaktor 7 des Systems eingetragene Herdofenkoks 44 aus Braunkohle wies somit einen Korngrößenbereich von 0 - 2,0 mm auf. Dabei machte die gröbste Fraktion mit dem Korngrößenbereich von 1,250 - 2,000 mm im eingegebenen Herdofenkoks (44) 23,7 Gew.-% aus. Der aus dem ersten Rührschlaufenreaktor 26 bzw. dem diesem nachgeschalteten ersten Trennapparat 31 ausgetragene beladene Herdofenkoks wies demgegenüber lediglich einen Anteil von 3,5 Gew.-% dieser Fraktion auf.

Der Anteil der darunterliegenden Fraktion mit dem Korngrößenbereich 1,0 - 1,25 mm machte bei dem über das Austrags- und Dosierorgan 4 eingegebenen Herdofenkoks (44) 24,3 Gew.-% aus, wohingegen der Anteil dieser Fraktion in dem aus dem ersten Trennapparat 31 ausgetragenen Adsorbens nur noch 4,9 Gew.-% betrug. Auch hier erfolgte eine Verringerung dieses Anteils auf etwa 20 Gew.-% des Ausgangswertes.

Entsprechendes gilt auch bei den weiteren Fraktionen mit den Korngrößenbereiche 0,8 - 1,0 mm, 0,5 - 0,8 mm sowie 0,315 - 0,50 mm, die jeweils eine erhebliche Verringerung ihres Anteils während des Durchgangs durch die beiden Rührschlaufenreaktoren 17, 26 erfuhren.

Als Konsequenz erfuhren die Fraktionen mit den kleinen Korngrößen bis maximal 0,315 mm, die in dem dem zweiten Rührschlaufenreaktor 7 aufgegebenen Herdofenkoks 44 einen Anteil von insgesamt nur 9,4 Gew.-% aufwiesen, beim Durchgang durch das System eine Vergrößerung auf 70,3 Gew.-%, also auf einen Wert, der mehr als das Siebenfache des Ausgangswertes beträgt.

Die in der Tabelle angeführten Korngrößenbereiche sind willkürlich gewählt. Es ist jedoch klar erkennbar, daß der durch die Erfindung angestrebte Effekt unabhängig von der Lage der Trennschnitte eintritt und ein beladenes Adsorbens das System verläßt, welches insgesamt eine wesentlich geringere Korngröße hat als das dem System zugeführte Adsorbens 44.

Der bei den Versuchen, deren Ergebnisse in der Tabelle dargestellt sind, verwendete Herdofenkoks 44 aus Braunkohle ist, wie bereits erwähnt, für das Verfahren gemäß der Erfindung besonders geeignet, da er einmal wenig abriebfest ist, also leicht zerbricht und Abrieb bildet, und zum anderen auch verhältnismäßig preiswert ist, so daß es rentabel ist, den beladenen Koks durch Verbrennen zu verwerten. Zudem verursacht dieser Koks auf Grund seiner geringen Härte wenig Verschleiß an den Apparaturen.

Es sind natürlich auch Aktivkohlen, die aus anderen Substanzen hergestellt sind, einsetzbar, z. B. Aktivkokse aus organischen Materialien, wie Knochen, Stroh, Papier, Holz, Nußschalen usw.

Diese Aktivkohlen sind jedoch in ihrer Herstellung wesentlich teurer, so daß ihre Verwendung bis an die Grenzen der Wirtschaftlichkeit des Verfahrens heranführen könnte.

Denkbar wäre auch die Verwendung von Steinkohlenkoks, der jedoch ohne aktivierende, also seine Oberfläche vergrößernde Behandlung eine merklich kleinere spezifische Oberfläche aufweist als Koks, insbesondere Herdofenkoks, aus Braunkohle. Zudem ist Steinkohlenkoks verhaltnismäßig hart, so daß seine Verwendung zu hohem Verschleiß führen würde und es, jedenfalls im Vergleich zu Braunkohlenkoks, notwendig wäre, zur Erzielung eines bestimmten Zerkleinerungsgrades sehr viel mehr Energie in die Reaktoren einzuführen als es bei Braunkohlenkoks der Fall ist. Dies würde jedoch zu einem noch höheren Verschleiß der Apparaturen führen.

Die den Überlauf 21 des Trennapparates 17 verlassende flüssige Phase 47, die aus zumindest teilweise adsorptiv gereinigtem Deponie-Sickerwasser besteht, kann über eine Leitung 35 einer Flockungs-/Fällungseinrichtung 36 zugeführt werden, die aus einer Mischstrecke und einem Absetzbehälter besteht. In die Flockungs-/Fällungseinrichtung 36 wird über eine Leitung 37 und eine Dosierpumpe 38 ein Flockungs-/Fällungsmittel 39 eingegeben, welches als Suspension oder flüssige Phase 47 dem Vorratsbehälter 52 entnommen wird. Auch hier erfolgt das Zuführen an Flockungs- und Fällungsmittel 39 in Abhängigkeit von Art und/oder Menge an Schadstoffen, die in der den zweiten Trennapparat 17 verlassenden flüssigen Phase noch enthalten sind.

In Strömungsrichtung des zu behandelnden Wassers 1 hinter der Flockungs-/Fällungseinrichtung 36 ist ein weiterer Trennapparat 40 angeordnet, der bezüglich Aufbau und Wirkungsweise mit dem Trennapparat 17 übereinstimmt. Das den Trennapparat 40 über den Überlauf 21 verlassende zumindest teilweise gereinigte Wasser 53 wird über die Leitung 41 abgeführt, während die Dickstoffpumpe 42 diskontinuierlich die im unteren Bereich sich sammelnden eingedickten Feststoffpartikel 54 über die Leitung 43 zur Eingangsleitung 30 für den ersten Trennapparat 31 transportiert.

Anstelle der Flockungs-/Fällungseinrichtung 36 und des nachgeschalteten Trennapparates 40 kann auch ein nicht dargestellter Festbettfilter vorgesehen sein, der mit Adsorptionsmaterial, beispielsweise Aktivkoks bzw. dem bereits erwähnten Herdofenkoks aus Braunkohle gefüllt ist. Mit Hilfe dieses Festbettfilters werden die Feststoffteilchen zurückgehalten werden, die mit der flüssigen Phase 47 am Überlauf 21 in die Leitung 35 gelangen. Der in dem Festbettfilter befindliche Herdofenkoks unterscheidet sich von dem im Vorratsbehälter 5 befindlichen frischen Herdofenkoks 44 normalerweise durch eine gröbere Körnung. Er ist insbesondere dann, wenn er basischen Charakter hat, dazu geeignet, die restlichen Metalle, insbesondere Schwermetalle aus dem Wasser 47 durch Adsorption zu entfernen.

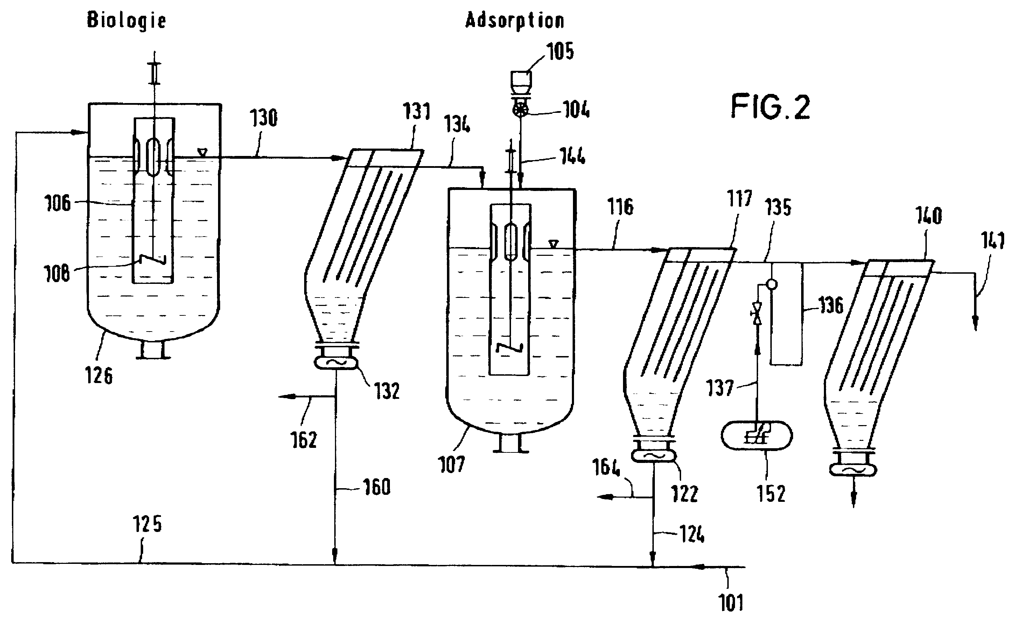

Fig. 2 zeigt in vereinfachter Darstellung das Schaltbild einer Anlage zur Reinigung von Abwässern, in welcher eine zumindest überwiegend adsorptive Reinigungsstufe und eine zumindest überwiegend biologische Reinigungsstufe auch funktionell miteinander verbunden sind. Bezüglich ihres Aufbaus stimmt diese Einrichtung in weiten Teilen mit der in Fig. 1 dargestellten Einrichtung überein, so daß gleiche Teile mit gleichen, jedoch in Fig. 2 mit jeweils um 100 höheren Bezugszeichen versehen sind. Im zweiten Rührschlaufenreaktor 107 findet, wie im Falle der Anlage gemäß Fig. 1, zumindest überwiegend eine adsorptive Behandlung des aus dem ersten Rührschlaufenreaktor 126 kommenden, in diesem Fall auch biologisch vorgereinigten Wassers unter Verwendung eines geeigneten Adsorbens, beispielsweise des bereits erwähnten Herdofenkokses 144 aus Braunkohle, statt. Abweichend von der im Zusammenhang mit Fig. 1 beschriebenen Ausführungsform ist jedoch hier das Adsorbens mit Nährstoffen für Bakterien angereichert. Die behandelte Suspension wird über die Leitung 116 in den Trennapparat 117 geführt, der in diesem Fall als Schrägklärer ausgebildet ist. Die sich im unteren Bereich des Trennapparates 117 sammelnde eingedickte Suspension aus Adsorbens und Wasser wird durch die Dickstoffpumpe 122 über die Leitung 124 der Zuleitung 125 für das zu behandelnde Wasser 101 zugegeben und mit letzterem in den ersten Rührschlaufenreaktor 126 geführt, in dem auch eine biologische Behandlung stattfindet. Hierbei dient das Adsorbens zugleich auch als Trägermaterial für Bakterien. Dabei wird, ggf. in Abhängigkeit vom Beladungsgrad des aus dem zweiten Rührschlaufenreaktor 107 kommenden Adsorbens, auch eine adsorptive Behandlung stattfinden, so daß adsorptive und biologische Behandlung im ersten Rührschlaufenreaktor 126 normalerweise einander überlagern.

Die Suspension aus Abwasser und Adsorptionsmittel wird über die Leitung 130 aus dem ersten Reaktor 126 in einen diesem nachgeschalteten ersten Trennapparat 131 geführt, der ebenfalls als Schrägklärer ausgebildet ist. Ein Teil des sich im unteren Bereich des Trennapparates 131 sammelnden eingedickten Feststoffs wird durch die Dickstoffpumpe 132 über die Leitungen 160 und 125 in den Rührschlaufenreaktor 126 zurückgeführt, um so eine Verarmung der Bakterienpopulation im ersten Reaktor 126 zu vermeiden. Der größere Teil des aus dem ersten Trennapparat 131 über die Dickstoffpumpe 132 abgezogenen Adsorbens wird über die Leitung 162 aus dem System herausgeführt und bei Verwendung beispielsweise von Herdofenkoks verbrannt.

Weiterhin kann auch ein Teil des aus dem zweiten Trennapparat 117 über die Feststoffpumpe 122 abgezogenen Feststoffes über die Leitung 164 aus dem System herausgeführt werden. Wie groß die Anteile der rückgeführten und aus dem System herausgeführten beladenen Adsorbentien ist, hängt von den jeweiligen Bedingungen ab, da der Anteil der Adsorbentien in der im Reaktor 126 befindlichen Suspension eine bestimmte obere Grenze nicht überschreiten darf, wenn der durch die Bakterien bewirkte biologische Abbau nicht beeinträchtigt werden soll.

Das im ersten Reaktor 126 vorgereinigte Wasser gelangt über die Leitung 134 in den zweiten Rührschlaufenreaktor 107, wobei es im allgemeinen unvermeidbar sein wird, daß noch, wenn auch in geringem Umfang, Bakterien in den zweiten Reaktor 107 eingebracht werden. Die Verweilzeit der Suspension im Reaktor 107 ist jedoch im allgemeinen zu kurz, als daß in diesem eine ins Gewicht fallende biologische Behandlung stattfände. Aber auch dann, wenn gleichzeitig biologische und adsorptive Behandlung erfolgen, wie dies im ersten Reaktor 126 in Abhängigkeit vom Beladungsgrad des Adsorbens der Fall sein wird, braucht keine Verringerung des Wirkungsgrades der einen oder der anderen Behandlungsart in Kauf genommen zu werden, da beide nebeneinander ablaufenden Behandlungen einander nicht oder jedenfalls nicht wesentlich nachteilig beeinflussen.

Die Zerkleinerung des Adsorbens kann auch bei der Ausführungsform gemäß Fig. 2 in beiden Reaktoren 126, 107 stattfinden. Andererseits ist es auch möglich, hier die Zerkleinerungsarbeit überwiegend im Reaktor 107 stattfinden zu lassen, wenn die dazu notwendige Agitation der Suspension im Reaktor 126 durch den Rührer 108 die Aufrechterhaltung der für die biologische Reinigung erforderlichen Bakterienpopulation erschwerte.

Der Überlauf aus dem zweiten Trennapparat 117 wird, wie im Falle des Ausführungsbeispiels gemäß Fig. 1, in eine Flockungs-/Fällungseinrichtung 136 geführt, der wiederum ein Trennapparat 140 nachgeschaltet ist. Das die Anlage über die Leitung 141 verlassende Wasser ist im allgemeinen so weitgehend gereinigt, daß es in einen Vorfluter gegeben werden kann.

Die konkreten Verfahrensbedingungen hängen von den jeweiligen Umständen ab. So kann die Verweilzeit des adsorptiv zu reinigenden Wassers im System beispielsweise zwei Stunden betragen. Die Menge an hinzuzufügendem Adsorbens bei Verwendung von Herdofenkoks aus Braunkohle kann zwischen 1 g/l und 10 g/l schwanken, wobei aber auch Werte außerhalb dieses Bereiches ohne weiteres möglich sind, da der Verschmutzungsgrad des Wassers sowie der Restgehalt an Schadstoffen im behandelten Wasser sowie andere Einflüsse, beispielsweise die Temperatur, dabei eine bedeutende Rolle spielen.

## Patentansprüche

1. Verfahren zum Entfernen von Schadstoffen aus Wasser durch Adsorption an festen, feinkörnigen Adsorbentien mit einer großen spezifischen Oberfläche, die mit dem Wasser eine Suspension bilden und dem zu reinigenden Wasser mit einer solchen Korngröße aufgegeben werden, daß innerhalb der Suspension durch entsprechende Energiezufuhr zu dieser eine Zerkleinerung zumindest der grobkörnigeren Bestandteile der Adsorbentien erfolgt, um so im Verlauf des Adsorptionsprozesses frische Oberflächen für die Adsorption zu schaffen, dadurch gekennzeichnet, daß die für die Zerkleinerung der Adsorbentien erforderliche Energie durch Rühren unter Verwendung eines Rührschlaufenreaktors in die Suspension eingeführt wird.

2. Verfahren nach Anspruch 1, dadurch gekennzeichnet, daß Aktivkohle als Adsorbens verwendet wird.

3. Verfahren nach Anspruch 1, dadurch gekennzeichnet, daß Braunkohlenkoks als Adsorbens verwendet wird.

4. Verfahren nach Anspruch 1, dadurch gekennzeichnet, daß die Adsorbentien mit einer Korngröße von 0,05 bis 5,0 mm in das Wasser gegeben werden.

5. Verfahren nach Anspruch 1, dadurch gekennzeichnet, daß das zu behandelnde Wasser vor Eintreten in die Adsorptionsstufe(n) einer biologischen Behandlung unterzogen wird.

6. Verfahren nach Anspruch 1, dadurch gekennzeichnet, daß das Wasser nach Verlassen der Adsorptionsstufe(n) einer biologischen Behandlung unterzogen wird.

7. Verfahren nach einem der vorhergehenden Ansprüche, dadurch gekennzeichnet, daß insbesondere bei mehrstufiger Adsorptionsbehandlung wenigstens eine der Adsorptionsstufen zugleich auch zur biologischen Behandlung des Wassers verwendet wird.

8. Verfahren nach einem der Ansprüche 5 - 7, dadurch gekennzeichnet, daß die Adsorbentien auch als Trägermaterial für Bakterien benutzt werden.

9. Verfahren nach Anspruch 1, dadurch gekennzeichnet, daß die Entfernung von Schadstoffen aus dem Wasser durch Adsorption und/oder biologische Behandlung in zwei aufeinanderfolgenden Verfahrensstufen durchgeführt wird und die Zugabe der frischen Adsorbentien in der zweiten Stufe erfolgt, von der sie zur weiteren Beladung in die erste Stufe geführt werden, in die das adsorptiv und/oder biologisch zu behandelnde Wasser eintritt.

10. Verfahren nach Anspruch 9, dadurch gekennzeichnet, daß eine merkliche Zerkleinerung der Adsorbentien zumindest in der zweiten Behandlungsstufe für das Wasser durchgeführt wird.

11. Verfahren nach Anspruch 5 oder 7 und 8, dadurch gekennzeichnet, daß das aus der Behandlungsstufe für das Wasser, in der letzteres biologisch und adsorptiv behandelt wird, abgezogene Adsorbens zumindest teilweise in die erste Verfahrensstufe zurückgeführt wird.

12. Verfahren nach Anspruch 1, dadurch gekennzeichnet, daß das Rühren der Suspension unter aeroben Bedingungen durchgeführt wird.

13. Verfahren nach Anspruch 12, dadurch gekennzeichnet, daß während des Rührens sauerstoffhaltiges Gas in die Suspension eingeführt wird.

14. Einrichtung zum Entfernen von Schadstoffen aus Wasser mit einem Reaktor (7, 26), in welchem das Wasser mit Adsorbentien in Berührung gebracht wird, dadurch gekennzeichnet, daß wenigstens zwei als Rührschlaufenreaktoren (7, 26) ausgebildete Reaktoren in Reihe hintereinander geschaltet sind und eine Zuführungseinrichtung (4) für Adsorbentien (44) dem in Strömungsrichtung des zu reinigenden Wassers letzten Reaktor (7) zugeordnet und eine Verbindungsleitung (24) vorgesehen ist, über die die aus dem nachgeschalteten Reaktor (7) abgezogenen Adsorbentien dem in Strömungsrichtung des zu behandelnden Wassers davor angeordneten Reaktor (26) zuführbar sind.

15. Einrichtung nach Anspruch 14, dadurch gekennzeichnet, daß wenigstens einer der Reaktoren (7, 26) mit einer Einrichtung (4) zum geregelten Zuführen der Adsorbentien (44) in den Reaktor (7, 26) versehen ist.

16. Einrichtung nach Anspruch 14, dadurch gekennzeichnet, daß dem wenigstens einen Reaktor (7, 26) ein Trennapparat (17, 31) nachgeschaltet ist, in welchem die Suspension in eine überwiegend aus Wasser bestehende Fraktion und eine überwiegend aus Feststoff bestehende Fraktion unterteilt wird.

17. Einrichtung nach einem der vorhergehenden Ansprüche, dadurch gekennzeichnet, daß wenigstens einer der Reaktoren (7, 26) mit einer Zuführungseinrichtung (12, 28) für das dosierte Zuführen eines Agens (45) zum Einstellen des pH-Wertes im Reaktor (7, 26) versehen ist.

18. Einrichtung nach Anspruch 14, dadurch gekennzeichnet, daß in Strömungsrichtung des zu reinigenden Wassers hinter dem letzten Reaktor (7) eine Flockungs-/Fällungseinrichtung (36) angeordnet ist.

## Claims

1. A method of eliminating of pollutants from water by adsorbing the pollutants at solid, fine-grained adsorbents having a large specific surface, which form a suspension in water and which are added to water to be purified having such a grain-size that by supplying sufficient energy to the suspension, at least crushing of the more coarse-grained part of the adsorbents takes place, in order to create during the adsorption process fresh surfaces for adsorption, characterized in that the energy necessary for crushing the adsorbents, is introduced into the suspension by stirring, using a stirring loop reactor.

2. A method according to claim 1, characterized in that charcoal is used as an adsorbent.

3. A method according to claim 1, characterized in that coke from lignite is used as an adsorbent.

4. A method according to claim 1, characterized in that adsorbents of a grain-size of 0,05 to 5,0 mm are added to water.

5. A method according to claim 1, characterized in that water to be purified is submitted to a biological treatment before it is fed to the adsorption stage.

6. A method according to claim 1, characterized in that water, after having passed the adsorption stage, is submitted to a biological treatment.

7. A method according to one of the preceding claims, characterized in that in particular in a multi-stage adsorption treatment at least one of the adsorption stages is also used for the biological treatment of water.

8. A method according to one of claims 5 to 7, characterized in that the adsorbents are also used as a carrier material for bacteria.

9. A method according to claim 1, characterized in that the elimination of pollutants from water by adsorption and/or biological treatment is carried out in two subsequent process stages and that the addition of fresh adsorbent takes place in the second stage, from which for additional loading it is fed into the first stage into which water to be purified by adsorption or by biological treatment is introduced.

10. A method according to claim 9, characterized in that a noticeable crushing of adsorbents is carried out at least within the second water treatment stage.

11. A method according to claim 5 or claims 7 and 8, characterized in that adsorbent withdrawn from the water treatment stage, wherein water is treated by biological treatment and adsorption, is recycled at least partly into the first process stage.

12. A method according to claim 1, characterized in that stirring of the suspension is carried out under aerobic conditions.

13. A method according to claim 12, characterized in that during stirring, oxygen containing gas is introduced into the suspension.

14. Device for eliminating pollutants from water with a reactor (7, 26) for contacting water with adsorbents,
characterized in that at least two reactors which are designed as stirring loop reactors (7, 26) are arranged in series and that a supply duct (4) for adsorbents (44) is integrated within the final reactor (7) based on the flow direction of the water to be purified and that a connecting pipe (24) is provided through which adsorbent, which is withdrawn form the subsequent reactor (7) is fed into the preceding reactor (26) based on the flow direction of the water to be treated.

15. Device according to claim 14, characterized in that at least one of the reactors (7, 26) is equipped with an installation (4) for the controled addition of adsorbents (44) to the reactor (7, 26).

16. Device according to claim 14, characterized in that to at least one reactor (7, 26) a subsequent separating apparatus (17, 31) is assigned, within which the suspension is subdivided into a fraction consisting predominatly of water and a fraction consisting predominantly of solids.

17. Device according to one of the preceding claims, characterized in that at least one of the reactors (7, 26) is equipped with a supply duct (12, 28) for the controlled addition of an agent (45) for the adjustment of the pH-value inside of the reactor (7, 26).

18. Device according to claim 14, characterized in that based on the flow direction of the water to be purified a flocculation-/precipitation-apparatus (36) is arranged behind the final reactor (7).

## Revendications

1. Procédé pour l'élimination des substances polluantes de l'eau par adsorption à des adsorbants solides, à grain fin avec une grande surface spécifique, qui forment une suspension avec l'eau et qui sont ajoutés à l'eau à purifier avec une granulation de telle façon, que au dedans de la suspension par l'amenéee d'énergie correspondante une fragmentation au moins des particles des adsorbants à plus gros grains a lieu, pour produire de cette manière des surfaces fraîches pour l'adsorption,
caractérisé en ce que l'énergie nécessaire pour la fragmentation des adsorbants est amenée par remuer par application d'une colonne à bulles à écoulement en boucle.

2. Procédé selon la revendication 1, caractérisé en ce que l'adsorbant appliqué est charbon actif.

3. Procédé selon la revendication 1, caractérisé en ce que l'adsorbant appliqué est coke de lignite.

4. Procédé selon la revendication 1, caractérisé en ce que les adsorbants sont ajoutés dans l'eau avec une granulation de 0,05 à 5,0 mm.

5. Procédé selon la revendication 1, caractérisé en ce que l'eau à traiter est soumis à un traitement biologique avant l'entrée dans l'adsorption.

6. Procédé selon la revendication 1, caractérisé en ce que l'eau est soumis à un traitement biologique après avoir quitté l'étage d'adsorption.

7. Procédé selon l'une des revendication précédentes, caractérisé en ce que en particulier en cas de traitement adsorptive à étages multiples, au moins une des étages adsorptive est utilisée en même temps pour le traitement biologique de l'eau.

8. Procédé selon les revendications 5 à 7, caractérisé en ce que les adsorbants sont utilisés aussi comme support pour des bactéria.

9. Procédé selon la revendication 1, caractérisé en ce que l'élimination des substances polluantes de l'eau par adsorption et/ou par traitement biologique est exécuté dans deux opérations consécutives et en ce que l'addition des adsorbants frais se passe dans l'étage second et en ce que l'adsorbant de l'étage second est amené dans l'étage premier où l'addition de l'eau à traiter adsorbtive ou biologique a lieu, pour chargement ultérieur de l'adsorbant.

10. Procédé selon la revendication 9, caractérisé en ce que une fragmentation perceptible a lieu au moins à l'étage secondaire.

11. Procédé selon la revendication 5 ou les revendications 7 et 8, caractérisé en ce que l'adsorbant retiré de l'étage à traitement de l'eau adsorptive et biologique, est recyclé au moins partiellement dans l'étage de l'operation première.

12. Procédé selon la revendication 1, caractérisé en ce que remuer la suspension est exécuté à conditions aérobic.

13. Procédé selon la revendication 12, caractérisé en ce que pendant remuer, du gaz contenant de l'oxygène est introduit dans la suspension.

14. Dispositif pour l'élimination des substances polluantes de l'eau avec un réacteur (7, 26), dans lequelle l'eau est mis en contact avec des adsorbants, caractérisé en ce que au moins deux réacteurs construis comme des colonnes à bulles à écoulement en boucles (7, 26) sont montés en série et qu'une aménage (4) pour adsorbants (44) est coordinée au réacteur dernier, etant basé sur le sens écoulement et qu'une conduite de connexion 824) est prévue, sur laquelle adsorbants, qui sont retirés du réacteur intercalé en arrière, sont amenée au réacteur intercalé devant, étant basé sur le sens écoulement.

15. Dispositif selon la revendication 14, caractérisé en ce que au moins un des réacteurs (7, 26) est équipé avec un dispositif (4) pour l'aménage réglée des adsorbants (44) dans le réacteur (7, 26).

16. Dispositif selon la revendication 14, caractérisé en ce que un séparateur (17, 31) est intercalé en arrière au moins d'un réacteur (7, 26), dans lequelle la suspension est séparée dans une fraction consistante prépondérant de l'eau et une fraction consistante prépondérant des solides.

17. Dispositif selon les revendications précédentes, caractérisé en ce que au moins un des réacteurs (7, 26) est équipé avec un dispositif (12, 28) pour l'aménage réglé d'un agent (45) pour l'ajustement du pH au fond du réacteur (7, 26).

18. Dispositif selon la revendications 14, caractérisé en ce que derrière le dernier réacteur, étant basé sur le sens écoulement, un dispositif à floculation/précipitation est arrangé.
